# EUROPÄISCHE PATENTSCHRIFT

(11) **EP 1 048 961 B1**
(45) Veröffentlichungstag und Bekanntmachung des Hinweises auf die Patenterteilung: **01.07.2009**
(21) Anmeldenummer: 00108685.9
(22) Anmeldetag: 20.04.2000
(51) Int. Cl.: G01S 17/58, G01S 7/48, G01S 7/481, G01S 17/89

(54) **Anordnung und Verfahren zur gleichzeitigen Messung der geschwindigkeit sowie der Oberflächengestalt von bewegten Objekten**
Apparatus and method for simultaneous measurement of the speed and surface characteristics of moving objects
Appareil et procédé de mesure simultanée de la vitesse et des caractéristiques de la surface d'objets mobiles

(30) Priorität: 30.04.1999 DE 19919925
(43) Veröffentlichungstag der Anmeldung: 02.11.2000
(73) Patentinhaber: SIEMENS AKTIENGESELLSCHAFT, 80333 München (DE)
(72) Erfinder: Doemens, Günter, Dr., 83607 Holzkirchen (DE); Stockmann, Michael, Dr., 83052 Bruckmühl (DE)

(56) Entgegenhaltungen:
- EP-A- 0 674 186
- WO-A-93/19429
- US-A- 5 621 807

## Beschreibung

Die Erfindung betrifft eine Anordnung und ein Verfahren zur Messung von Geschwindigkeit oder Geometrie von bewegten Objekten mittels der Aufnahme von Abstandsbildern (Höhenwertbilder) auf der Basis von Lichtlaufzeitmessungen.

Für die automatische Überwachung des Fahrzeugverkehrs sowie des allgemeinen Materialtransportes ist die Geschwindigkeit des einzelnen Objektes sowie dessen Charakterisierung notwendig. Bei der Verkehrsüberwachung bedeutet dies die genaue Messung der Fahrzeuggeschwindigkeit sowie beispielsweise die Unterscheidung zwischen Personenwagen, Lastwagen oder Zweirad. Beim Materialtransport durch ein Förderband kann z. B. durch ständige Erfassung der Geschwindigkeit sowie des Querschnittes des transportierten Materiales das gesamte in der Zeiteinheit beförderte Volumen und auch bei konstantem spezifischen Gewicht die Menge, d. h. das Gesamtgewicht automatisch bestimmt werden.

Wird lediglich die Geschwindigkeit von Fahrzeugen gemessen, so stehen heute verschiedene Verfahren zur Verfügung wie Radar oder Infrarotsysteme, die passiv messen. Diese Systeme erfüllen im wesentlichen die gestellten Anforderungen. Es ist jedoch äußerst nachteilig, daß in oder gegen die Fahrtrichtung der Objekte gemessen werden muß und daß eine gleichzeitige Charakterisierung des bewegten Objektes nur sehr eingeschränkt realisierbar ist.

Es ist ein Verfahren bekannt, bei dem durch einen CMOS-Bildsensor mit extrem kurzer Integrationszeit (z. B. 30 ns) sowie einer Laserimpulsbeleuchtung des Objektes ein Entfernungsbild (Abstandsbild, Höhenbild) gewonnen wird. Hauptanwendung dabei ist bisher die Überwachung von Räumen, insbesondere die Überwachung eines Fahrzeuginnenraumes.

Die EP 067 4186 zeigt eine Anordnung gemäß dem Oberbegriff von Anspruch 1.

Der Erfindung liegt die Aufgabe zugrunde, eine Anordnung und ein Verfahren für eine genaue Geschwindigkeitsmessung sowie eine Erfassung der Geometrie von bewegten Objekten mit einem einzigen System zur Verfügung zu stellen.

Die Lösung dieser Aufgabe geschieht durch die Merkmalskombination von Anspruch 1 bzw. von Anspruch 15.

Der Erfindung liegt die Erkenntnis zugrunde, daß aufbauend auf dem Prinzip der Erstellung von Abstandsbildern bzw. Objektprofilen mittels Lichtlaufzeitmessungen die beschriebene Aufgabe gelöst werden kann. Hierzu werden zwei Halbleitersensorzeilen in Verbindung mit einer Beleuchtung eingesetzt, wobei Oberflächenteile von Objekten beleuchtet werden und durch Auswertung der Lichtlaufzeiten von der Beleuchtung zum Objekt und zur Sensorzeile Abstandsbilder von den optoelektronischen Halbleitersensorzeilen geliefert werden. Der Einsatz zweier beabstandeter Halbleitersensorzeilen ermöglicht die kurzzeitig versetzte Aufnahme des gleichen Oberflächenprofils bzw. des gleichen Ortes am Objekt, wobei mit bekanntem Abstand zwischen den Sensorzeilen bzw. zwischen den ausgeleuchteten Streifen auf einem Hintergrund oder auf einer Referenzebene die Geschwindigkeit des Objektes errechnet wird. Es werden zunächst eine Vielzahl von Querschnittsflächen des bewegten Objektes aufgenommen, deren Folge das Längsprofil des Objektes beschreibt. Somit ist insgesamt eine Messung der Geschwindigkeit und eine Aufzeichnung der Geometrie des vermessenen Objektes durch ein einziges System realisierbar.

Vorteilhafte Ausgestaltungen können den Unteransprüchen entnommen werden.

Zur Erhöhung der Auslesegeschwindigkeit auf der elektrischen Seite der Halbleitersensorzeilen ist es vorteilhaft, die Sensorelemente frei auswählen zu können. Dadurch wird ein relativ langsames serielles Auslesen von Sensorzeilen umgangen. Der Einsatz der CMOS-Technik durch die Verwendung von CMOS-Bauelementen bei den Halbleitersensorzeilen bewirkt eine besonders kompakte Bauweise, wobei ein besonderer Vorteil daraus resultiert, beide Lichtzeilen auf einem Halbleiterbauelement zu integrieren.

Wird die Anzahl der Sensorelemente, aus denen eine Halbleitersensorzeile aufgebaut ist, begrenzt, beispielsweise auf 32, so sind die einzelnen die Halbleitersensorzeilen darstellenden Sensorelemente von ausreichender Größe und weisen entsprechende Lichtempfindlichkeit auf. Entsprechend kann die Leistung der Beleuchtungsseite gering gehalten werden.

Darüber hinaus kann eine derartige lichtempfindliche Halbleitersensorzeile in extrem kurzer Zeit, z. B. in wenigen µsec ausgelesen werden. Es ist vorteilhaft, die in der Nähe der Halbleitersensorzeilen befindlichen Lichtquellen als modulierbare, beispielsweise frequenz- oder amplitudenmodulierbare Laserdioden auszulegen. Zur Einhaltung beispielsweise von Laserschutzbestimmungen kann mit mehreren Lichtquellen gearbeitet werden, die ein Objekt jeweils partiell beleuchten. Die Lichtquellen werden dabei vorzugsweise seriell aktiviert, wobei partielle Oberflächenbereiche beleuchtet werden und korrespondierend an den Halbleitersensorzeilen ausgewertet werden. Die vorteilhafteste Anordnung der Halbleitersensorzeilen relativ zu den Objekten besteht in deren senkrechter Ausrichtung relativ zur Fahrtrichtung der Objekte bei einer Passierung oberhalb oder seitwärts von den Objekten. Durch die Beleuchtung, die sehr nahe bei den Halbleitersensorzeilen angeordnet ist, wird ein zeilenartiger Bereich auf dem Objekthintergrund ausgeleuchtet, der ungefähr dem Erfassungsbereich der Halbleitersensorzeilen entspricht. Die der jeweiligen Sensorzeile zuzuordnenden Beleuchtungs- und Erfassungsbereiche sind vorteilhafterweise 1 m beabstandet. Beide Bereiche sind korrespondierend zu den Halbleitersensorzeilen gegenseitig parallel ausgerichtet. Sind Fahrzeuge, die sich auf einer Fahrbahn bewegen, zu erfassen, so sollte die Fahrbahnbreite vollständig ausgeleuchtet sein.

Die ortsauflösende Struktur der Halbleitersensorzeilen wird durch einzelne Elementbereiche, die in einer Zeile angeordnet sind, dargestellt. Somit existiert eine Korrespondenz zwischen einzelnen Sensorelementen der Halbleitersensorzeile und einem korrespondierenden Ort in dem zeilenartigen Erfassungsbereich der Halbleitersensorzeile auf dem Objekthintergrund oder auf dem Objekt. Wird vorteilhafterweise als Lichtlaufzeit-Meßverfahren die Kurzzeitintegration gewählt, so besteht ein spezielles Meßverfahren darin, zu zwei kurz aufeinander folgenden Integrationszeiten das bis dahin an den Halbleitersensorelementen eingegangene Licht zu messen bzw. zu integrieren. Um die beiden Integrationszeiten zeitlich parallel ausführen und damit die Meßzeit verkürzen zu können, werden die einzelnen Sensorelemente der Halbleitersensorzeilen derart doppelt ausgelegt, daß eine gleiche optische Beaufschlagung erfolgt. Dies geschieht durch eine Verzahnung von elektrisch getrennten lichtempfindlichen Flächen auf jeweils einem Sensorelement.

Zur Ermittlung der Oberflächengestalt von Fahrzeugen wird nach der Aufnahme eines Abstandsprofils des Hintergrundes ein Abstandsprofil des Hintergrundes mit einem darauf befindlichen Objekt aufgenommen. Die Differenzen daraus ergeben eine Vielzahl von Profilen des Objektes. Aus diesen Querschnittsprofilen läßt sich jeweils die Fläche des Querschnittes errechnen. Aus der Folge von Querschnittsflächen resultiert das Längsprofil des bewegten Objektes. Durch den Einsatz von zwei Halbleitersensorzeilen mit vorgegebenem Abstand voneinander lassen sich sowohl die Objektgestalt als auch die Geschwindigkeit des Objektes ermitteln. Ein besonderer Vorteil liegt darin, daß anhand dieser Daten ein Objekt kategorisiert werden kann. Somit kann durch Vergleich mit einem jeweiligen Muster beispielsweise erkannt werden, ob es sich bei dem bewegten Objekt um eine Person, ein Motorrad, einen Personenkraftwagen oder einen Lastkraftwagen handelt.

Im folgenden werden anhand von schematischen nicht einschränkenden Figuren Ausführungsbeispiele beschrieben.
- Figur 1: zeigt eine schematische Draufsicht auf ein Fahrzeug, das sich mit einer Geschwindigkeit in Pfeilrichtung bewegt mit den Erfassungsbereichen der darüber angeordneten Halbleitersensorzeilen,
- Figur 2: zeigt in einem Intensitäts/Zeit-Diagramm einen Laserimpuls mit zwei Kurzzeitintegrationen für die Abstandsmessung,
- Figur 3: zeigt die schematische Verkehrsüberwachung anhand der Erfassung des Hintergrundes ohne Objekt und mit Objekt, quer zur Fahrtrichtung,
- Figur 4: zeigt schematisch die in einer Halbleitersensorzeile enthaltenen Sensorelemente und und ein Beleuchtungsband, das sich über den Erfassungsbereich der Sensorzeile erstreckt,
- Figur 5: zeigt eine Anordnung entsprechend Figur 4, wobei mehrere Lichtquellen einen Erfassungsbereich der Sensorzeile ausleuchtet,
- Figur 6: zeigt eine verzahnte Oberflächenstruktur der elektrisch getrennten lichtempfindlichen Bereiche auf einem Sensorelement,
- Figur 7: zeigt die Integration zweier Halbleitersensorzeilen, die entsprechend Figur 6 ausgebildet sind,
- Figur 8: zeigt zwei ermittelte Längsprofile eines Fahrzeugs zu unterschiedlichen Zeiten,
- Figur 9: zeigt eine Darstellung entsprechend Figur 8, wobei die bewegten Objekte Kraftfahrzeuge sind.

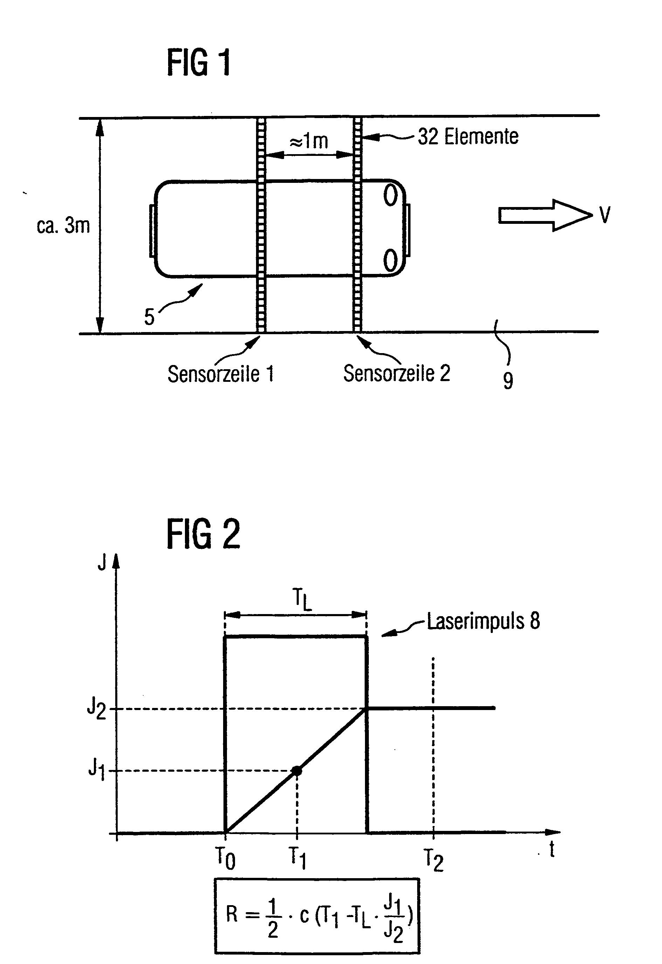

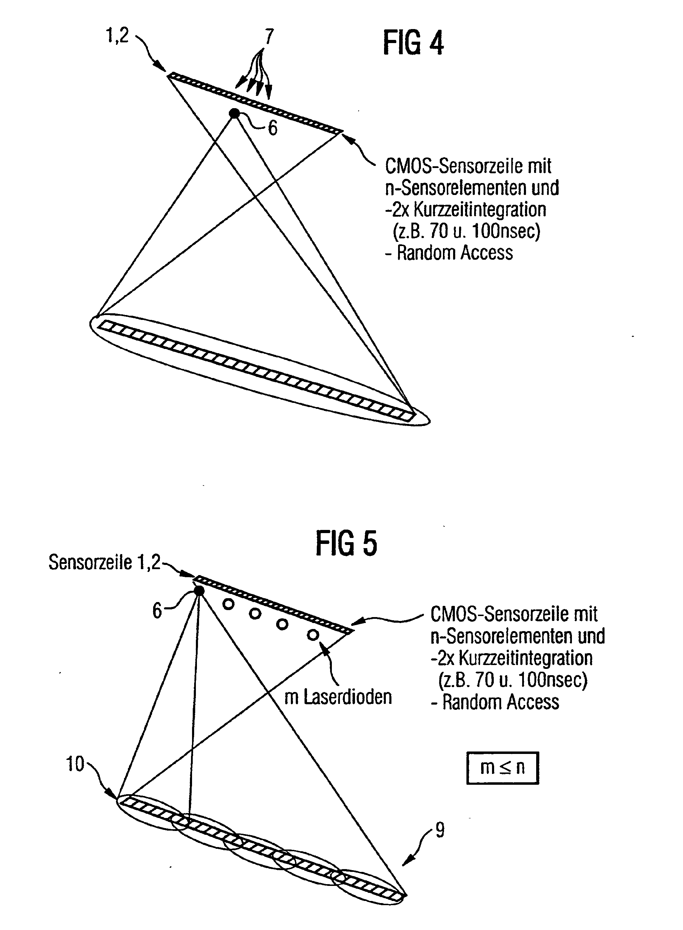

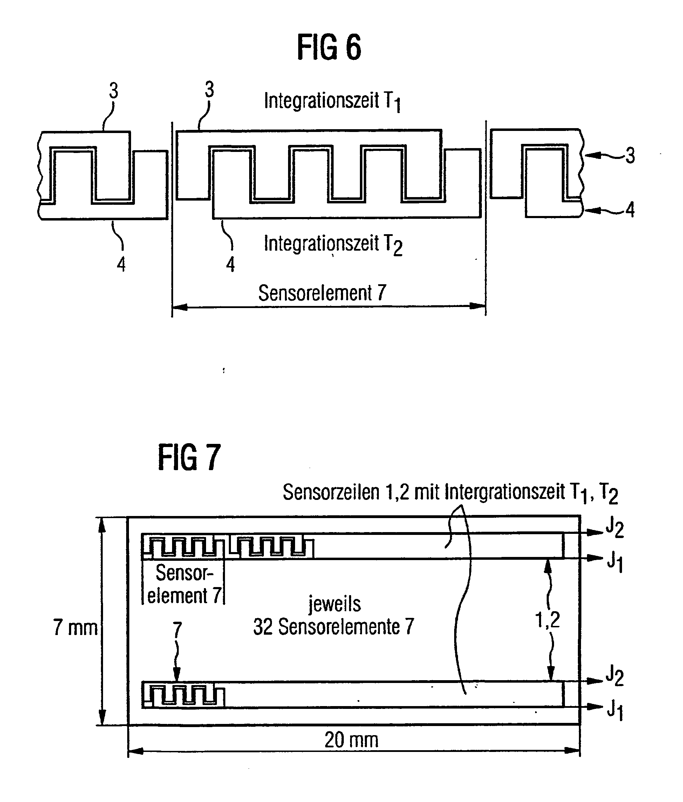

Die vorgeschlagene Anordnung und das entsprechende Verfahren ergeben eine genaue Geschwindigkeitsmessung senkrecht zur Fahrtrichtung sowie eine Geometrie-Erfassung des Objektes bzw. der Objektoberfläche durch ein einziges kostengünstiges und robustes System, welches auch an vorhandenen Lichtmasten im städtischen Bereich problemlos aufgrund der geringen Abmessungen und des geringen Gewichtes angebracht werden kann. In der Praxis wird ausgehend von dem oben beschriebenen Prinzip der Erfindung die Kombination von zwei Halbleitersensorzeilen mit Kurzzeitintegration und Beleuchtung durch Laserimpulse Anwendung finden. Die Darstellung entsprechend Figur 1 zeigt zwei Erfassungsbereiche der Halbleitersensorzeilen 1, 2, die quer zur Fahrtrichtung des Objektes, insbesondere senkrecht dazu, angeordnet sind. Ihre Beabstandung beträgt ca. 1 m. Die Fahrtrichtung und die Geschwindigkeit V des Objektes 5 ist mit einem Pfeil angedeutet. Das Objekt 5 ist in diesem Fall ein Fahrzeug, das auf einer Fahrbahn mit einer Breite von ca. 3 m bewegt wird. In diesem speziellen Fall weisen die Halbleitersensorzeilen 1, 2 jeweils 32 Sensorelemente auf. Die Länge einer Halbleitersensorzeile muß nicht der Breite der Fahrbahn entsprechen. Mittels einer jeweils notwendigen abbildenden Optik muß jedoch der Erfassungsbereich der Halbleitersensorzeilen 1, 2 auf dem Hintergrund und damit auch auf dem Objekt 5 die Fahrbahnbreite abdecken. Gleiches gilt für die Beleuchtungsseite, dargestellt in den Figuren 4 und 5, wobei wiederum eine abbildende Optik für einen zeilenartigen Beleuchtungsbereich sorgt. Eine abbildende Optik ist in sämtlichen Figuren nicht dargestellt, sondern lediglich durch Randstrahlen zwischen Lichtquelle, Objektbereich und Sensorbereich dargestellt. Die Halbleitersensorzeilen können entsprechend Figur 7 auf einem Halbleiterchip integriert werden.

Um eine möglichst präzise Geschwindigkeitsmessung zu gewährleisten, entspricht die Breite der Halbleitersensorzeile auf der Fahrbahnebene, dem Hintergrund, nur etwa 1 bis 2 cm. Quer zur Fahrtrichtung genügen für die Charakterisierung des Fahrzeuges eine sehr begrenzte Anzahl von Sensorelementen 7, beispielsweise 32. Dadurch werden die lichtempfindlichen Flächen des einzelnen Sensorelementes 7 relativ groß und damit kann die erforderliche Laserleistung gering gehalten werden.

Die relativ geringe Anzahl von lichtempfindlichen Sensorelementen 7 hat den entscheidenden Vorteil, daß eine Sensorzeile 1, 2 in extrem kurzer Zeit, beispielsweise wenige µsec, ausgelesen werden kann. Die Bewegung eines Fahrzeuges mit beispielsweise 100 km/h beträgt in diesem Zeitintervall lediglich wenige mm. Die Entfernung von der Sensorzeile 1, 2 zur Straßen- bzw. Fahrzeugoberfläche errechnet sich aus den Intensitäten J₂, J₁ bei zwei unterschiedlichen Integrationszeiten T₁, T₂ sowie der bekannten Laserimpulsdauer T_{L}, wie es in Figur 2 dargestellt wird. Diesbezügliche Berechnunsverfahren werden beispielsweise in der nicht vorveröffentlichten deutschen Patentanmeldung P 198 33 207 beschrieben. In Figur 2 wird ein Abstandsvektor R entsprechend der dort angegebenen Formel errechnet. Dabei bedeutet T₀ die Lichtlaufzeit, die vergeht, bis das ausgesandte und vom Objekt reflektierte Licht auf der Sensorzeile eintrifft. Der in Figur 2 dargestellte Rechteck-Laserimpuls 8 ist derjenige, der am Objekt eintrifft bzw. detektiert wird. Zu den entsprechenden Integrationszeiten T₁, T₂ werden zwei Intensitäten J₁ und J₂ gemessen Der in der Formel in Figur 2 weiterhin auftauchende Buchstabe c steht für die Lichtgeschwindigkeit.

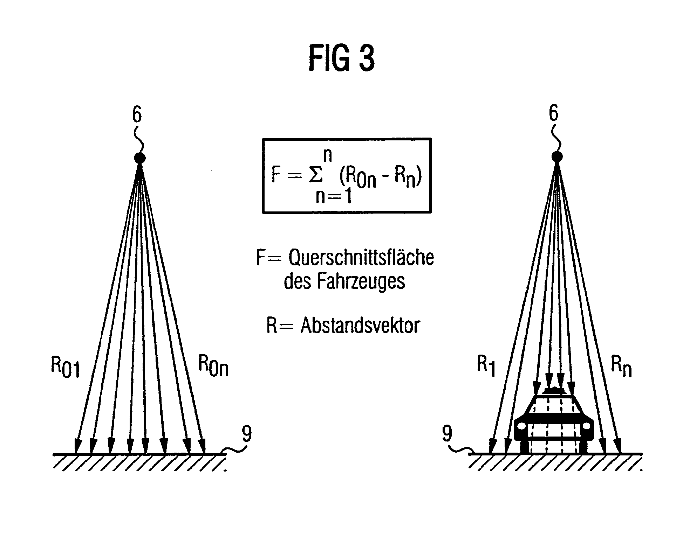

Zu einem bestimmten Zeitpunkt ergibt sich dann die Querschnittsfläche F eines unter der Halbleitersensorzeile befindlichen Fahrzeuges durch die Beziehung entsprechend Bild 3. Die zwei in Figur 3 gezeigten Darstellungen funktionieren mit einer einzigen Lichtquelle 6. Die jeweiligen Abstandsvektoren gehen in die Berechnung der Querschnittsfläche, beispielsweise eines Kraftfahrzeuges, ein. Im linken Teil der Figur 3 ist die Aufnahme des Hintergrundes 9 angedeutet, Sensorzeile wohingegen im rechten Teil der Figur 3 auf dem Hintergrund 9 ein bewegtes Objekt 5, ein Kraftfahrzeug vorhanden ist. Diese Rechnungen sind unabhängig von dem Auswerteverfahren, so daß verschiedene Lichtlaufzeitmessungen verwendet werden können.

Die Beleuchtung der Objektoberflächen durch eine Impulslaser erfolgt möglichst kolinear mit der abbildenden Optik für eine Halbleitersensorzeile. Um die Laserleistung gering zu halten, wird die Objektseite entsprechend der Ausdehnung der nur linienhaft beleuchtet, z. B. durch Verwendung eines diffraktiyen Elementes, wie es in Bild 4 dargestellt wird. Eine weitere Verringerung der Lichtleistung eines einzelnen Impulslasers erzielt man durch die Verwendung mehrerer Laserquellen, die die Erfassungsbereiche der Zeile nur jeweils partiell beleuchten und nacheinander aktiviert werden. Siehe hierzu Figur 5. Das Auslesen des jeweils beleuchteten Bereiches aus der Zeile geschieht dann über einen wahlfreien Bildpunktzugriff (Random Access). Neben den sicherheitstechnischen Aspekten hat eine geringe Impulslaserleistung auch den Vorteil der steileren Anstiegsflanken und somit auch einen Einfluß auf die erzielbare Genauigkeit des Gesamtsystems. In den Figuren 4 und 5 sind jeweils ohne genaue Darstellung der zwischengeschalteten Optik Lichtquellen 6, Sensorzeilen 1, 2 und eine entsprechende Beleuchtungszeile 10 auf dem Hintergrund 9 dargestellt. Die Anzahl der Laserdioden m sollte kleiner oder gleich der Anzahl von Sensorelementen 7 einer Sensorzeile 1, 2 sein, was der Anzahl von aufnehmbaren Abstandsvektoren entspricht. In Figur 5 ist deutlich die Darstellung der Beleuchtungszeile 10 aus einer Aneinanderreihung von mehreren ovalen Beleuchtungsflecken entsprechend der Mehrzahl von Laserdioden zu erkennen.

Figur 6 zeigt einen Ausschnitt aus einer Sensorzeile 1, 2 mit einem vollständigen Sensorelement 7 zur Verwendung bei der Kurzzeitintegration als Lichtlaufzeitmeßverfahren. Die verzahnung der Sensorelementhälften 3,4 ermöglicht eine parallele Durchführung der beiden Integrationen mit den Zeiten T₁ und T₂. Da diese Integrationen jedoch für den gleichen Objektort durchgeführt werden müssen, ist entsprechend Figur 6 das einzelne Sensorelement 7 aus zwei elektrisch getrennten Sensorelementen aufgebaut, deren lichtempfindliche Flächen ineinander verzahnt sind. Dies bedeutet eine lokale Koinzidenz. Damit verbundene Vorteile bestehen in einer weiteren Reduzierung der notwendigen abzugebenden Laserenergie während eines Meßvorganges sowie in einer Verminderung der Meßzeit.

Eine erhebliche Kostenreduzierung sowie eine deutliche Verkleinerung des Gesamtsystems ergibt sich, wenn die beiden Sensorzeilen 1, 2 auf einem Chip integriert sind, wie es in Figur 7 dargestellt wird. Der Chip hat die ungefähren Ausmaße von 7 x 20 mm. Jede Sensorzeile 1, 2 besteht aus 32 Sensorelementen 7. Die Sensorelemente 7 sind wiederum unterteilt in zwei ineinander verzahnte Bereiche. Für jede Sensorzeile ist elementweise die Intensität J₁, J₂ wahlfrei auslesbar. Die Abbildung der Sensorzeile geschieht wiederum durch eine einzige Optik auf die Fahrbahn bzw. Straße.

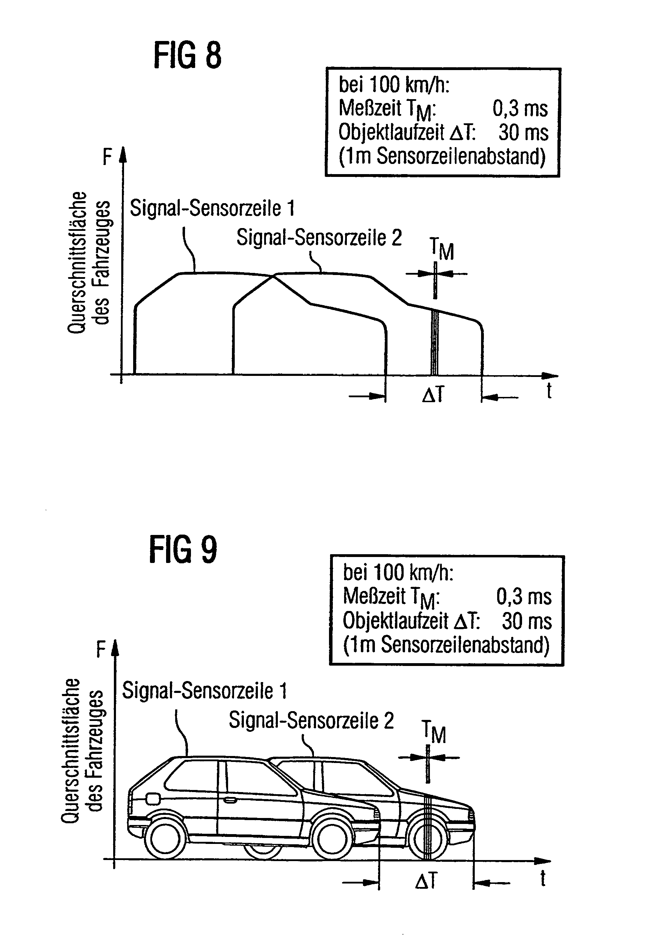

Die Aneinanderreihung von gemessenen Querschnittsflächen ergibt die Kontur des Fahrzeuges in Fahrtrichtung. Bei 100 km/h erfolgt im Abstand von etwa 1 cm immer eine Querschnittsmessung. Die in einer Entfernung von 1 m liegende Erfassungsbereich der zweiten Sensorzeile, die 1 m von der ersten Beleuchtungszeile 10 beabstandet ist, liefert mit einer der Geschwindigkeit des Fahrzeuges proportionalen Verzögerung den identischen Konturverlauf, wie es in den Figuren 8 und 9 dargestellt ist. Die Zeitverzögerung zwischen den beiden Signalen kann einfach und genau durch bekannte Verfahren der Korrelation oder ähnlicher Methoden erfaßt werden. Die Charakterisierung der Fahrzeuge erfolgt eindeutig aus den Maximalwerten von Länge, Höhe und Breite, die präzise aus den gemessenen Längs- und Querkonturverläufen ermittelt werden können.

Eine erfindungsgemäße Anordnung und ein erfindungsgemäßes Verfahren liefern eine Geschwindigkeitsmessung senkrecht zur Fahrtrichtung von bewegten Objekten mit einer Meßunsicherheit von 1 %. Bei dem Einsatz als Fahrzeugidentifizierung kann eine Kategorisierung beispielsweise in PKW, LKW oder Zweirad vorgenommen werden. Dies geschieht durch die exakte Erfassung von Länge, Höhe und Breite des bewegten Objektes bzw. Fahrzeuges. Die Messung kann bei Tag und Nacht durchgeführt werden und ist störsicher gegen den Einfluß von beispielsweise Fahrzeugscheinwerfer. Das System ist insgesamt kostengünstig und robust durch eine ausschließliche Verwendung von Halbleiterbauelementen.

Ein weiteres breites Anwendungsfeld für die Geschwindigkeitsmessung mit gleichzeitiger Querschnittsprofilerfassung ergibt sich bei der automatischen Bestimmung der Transportmenge von Förderbändern.

Auch die berührungslose Füllstandsmessung von Schnittgut kann zweckmäßigerweise mit der beschriebenen Anordnung durchgeführt werden. Eine Sensorzeile 1, 2 wird dabei um die Achse eines Silos um 360° bzw. 180° gedreht.

## Patentansprüche

1. Anordnung zur Messung der Geschwindigkeit oder der Oberflächengestalt von bewegten Objekten (5) oder einer Kombination daraus auf der Basis von Lichtlaufzeitmessungen, **gekennzeichnet durch**
- mindestens zwei aus einer Mehrzahl von Sensorelementen (7) dargestellten ortsauflösenden zueinander beabstandeten und parallel ausgerichteten, sowie quer zur Fahrtrichtung der Objekte (5) angeordneten optischen Halbleitersensorzeilen (1,2) mit denen Abstandsprofile der Objekte (5) aufnehmbar sind,
- mindestens einer im Bereich der Halbleitersensorzeilen (1,2) positionierten Lichtquelle (6) zur Beleuchtung des Objektes (5) mit Lichtimpulsen.

2. Anordnung nach Anspruch 1, wobei einzelne Sensorelemente (7) der Halbleitersensorzeilen (1,2) wahlfrei zugreifbar sind.

3. Anordnung nach einem der vorhergehenden Ansprüche, wobei die Halbleitersensorzeilen (1,2) CMOS-Bauelemente sind.

4. Anordnung nach einem der vorhergehenden Ansprüche, wobei die Lichtquellen (6) durch modulierbare Laserdioden dargestellt sind.

5. Anordnung nach einem der vorhergehenden Ansprüche, wobei mehrere Lichtquellen (6) zur jeweils partiellen Beleuchtung der Objekte (5) eingesetzt werden.

6. Anordnung nach einem der vorhergehenden Ansprüche, wobei die Halbleitersensorzeilen (1,2) senkrecht zur Fahrtrichtung der Objekte (5) angeordnet sind.

7. Anordnung nach einem der vorhergehenden Ansprüche, wobei die Halbleitersensorzeilen (1,2) oberhalb der Objekte (5) oder seitwärts davon angeordnet sind.

8. Anordnung nach einem der vorhergehenden Ansprüche, wobei die Erfassungsbereiche der jeweiligen Halbleitersensorzeilen (1,2) am Objektort circa 1 m beabstandet sind.

9. Anordnung nach einem der vorhergehenden Ansprüche, wobei die am Objekthintergrund beleuchtete Zeile eine Breite im Bereich von 1 bis 2 cm aufweist.

10. Anordnung nach einem der vorhergehenden Ansprüche, wobei die Lichtlaufzeitmessungen in den einzelnen Sensorelementen (7) der Sensorzeilen (1,2) Pulslaufzeitmessungen, Kurzzeitintegrationen oder Phasenmessungen sind.

11. Anordnung nach Anspruch 10, wobei für eine Kurzzeitintegration die Sensorelemente (7) der Halbleitersensorzeilen (1,2) jeweils aus zwei elektrisch getrennten Elementbereichen (3,4) bestehen, deren lichtempfindliche Flächen ineinander verzahnt sind.

12. Anordnung nach einem der vorhergehenden Ansprüche zur Bestimmung der Geschwindigkeit (V) und der Oberflächengestalt von Fahrzeugen bzw. Kraftfahrzeugen.

13. Anordnung nach einem der vorhergehenden Ansprüche, wobei der Erfassungsbereich einer Halbleitersensorzeile (1,2) die gesamte Fahrbahnbreite erfaßt.

14. Verfahren zur Bestimmung der Geschwindigkeit oder der Oberflächengestalt von bewegten Objekten (5) oder einer Kombination daraus auf der Basis von Lichtlaufzeitmessungen, wobei mittels einer Anordnung nach einem der Ansprüche 1-13 Abstandsprofile von bewegten Objekten (5) erstellt werden und zur Auswertung ein Abstandsprofil des Hintergrundes ohne Objekt und ein Abstandsprofil des Hintergrundes mit Objekt aufgenommen werden und aus deren Differenz ein Querschnittsprofil des Objektes (5) ermittelt wird.

15. Verfahren nach Anspruch 14, wobei durch Integration des Querschnittsprofils die Fläche des entsprechenden Querschnittes ermittelt wird.

16. Verfahren nach Anspruch 15, wobei aus der Folge der Querschnittsflächen das Längsprofil des bewegten Objektes (5) ermittelt wird.

17. Verfahren nach einem der Ansprüche 14-16, wobei anhand von Querschnitts- und Längsprofil ein bewegtes Objekt (5), in Kategorien wie - Person, Motorrad, Personenkraftwagen oder Lastkraftwagen - eingeordnet wird.

18. Verfahren nach einem der Ansprüche 14-17, wobei bei der Lichtlaufzeitmessung zwei unterschiedliche Kurzzeitintegrationen mit zwei verschiedenen Integrationszeiten (T1,T2) für den gleichen Objektort durchgeführt werden.

19. Verfahren nach Anspruch 18, wobei die beiden Kurzzeitintegrationen für den gleichen Oberflächenbereich jeweils durch eine von zwei ineinandergreifende Elementbereiche (3,4) der Sensorelemente (7) stattfindet.

## Claims

1. Apparatus for measuring the speed or the surface characteristics of moving objects (5) or a combination thereof based on light delay time measurements,
**characterized by**
- at least two optical semiconductor rows (1, 2) represented by a plurality of locally-resolving sensor elements (7) spaced from each other and arranged in parallel and also arranged transverse to the direction of travel of the objects (5), with which distance profiles of the objects (5) are able to be recorded,
- at least one light source (6) positioned in the area of the semiconductor rows (1, 2) for illuminating the object (5) with pulses of light.

2. Apparatus according to claim 1, with access to the individual sensor elements (7) of the semiconductor sensor rows (1,2) able to be freely selected.

3. Apparatus according to one of the previous claims, with the semiconductor sensor rows (1, 2) being CMOS components.

4. Apparatus according to one of the previous claims, with the light sources (6) being represented by modulatable laser diodes.

5. Apparatus according to one of the previous claims, with a number of light sources (6) each being used for partial illumination of the objects (5).

6. Apparatus according to one of the previous claims, with the semiconductor sensor rows (1, 2) being arranged at right angles to the direction of travel of the objects (5).

7. Apparatus according to one of the previous claims, with the semiconductor sensor rows (1, 2) being arranged above the objects (5) or to the side thereof.

8. Apparatus according to one of the previous claims, with the detection areas of the respective semiconductor rows (1, 2) being spaced from each other by around 1m at the object location.

9. Apparatus according to one of the previous claims, with the row illumnated in the object background having a width ranging between 1 and 2 cm.

10. Apparatus according to one of the previous claims, with the light delay time measurements in the individual sensor elements (7) of the sensor rows (1, 2) being pulse delay measurements, short-term integrations or phase measurements.

11. Apparatus according to claim 11 with, for a short-term integration, the sensor elements (7) of the semiconductor sensor rows (1, 2) each consisting of two electrically-isolated element areas (3, 4) the light-sensitive surfaces of which are intermeshed with each other.

12. Apparatus according to one of the previous claims for determining the speed (V) and the surface characteristics of vehicles or of motor vehicles.

13. Apparatus according to one of the previous claims, with the detection area of a semiconductor sensor row (1, 2) detecting the entire carriageway width.

14. Method for measuring the speed or the surface characteristics of moving objects (5) or of a combination thereof based on light delay measurements, with distance profiles of moving objects (5) being created by means of an apparatus according to one of claims 1-13 and being recorded for evaluating a distance profile of the background without object and a distance profile of the background with object and a cross-sectional profile of the object (5) being determined from the difference between them.

15. Method according to claim 14, with the surface of the corersponding cross-section being detremined by integration.

16. Method according to claim 15, with the longitudinal profile of the moving object (5) being determined as a result of the cross-sectionsl surfaces.

17. Method according to one of claims 14-16, with a moving object (5) being arranged on the basis of cross-sectional and longitudinal profile into categories such as - person, motor cycle, car or lorry.

18. Method according to one of claims 14-17, with two different short-term integrations being executed with two different integration times (T1, T2) during light delay time measurement for the same object location.

19. Method according to claim 18, with the two short-term integrations each being conducted for the same surface area by one of two intermeshing element areas (3,4) of the sensor elements (7).

## Revendications

1. Dispositif pour mesurer la vitesse ou la forme de surface d'objets (5) déplacés ou d'une combinaison de ces objets sur la base de mesures de temps de propagation de lumière,
**caractérisé par**
- au moins deux lignes de capteur à semi-conducteurs (1, 2) optiques représentées à partir d'une pluralité d'éléments de capteur (7), à résolution locale, espacés les uns les autres et orientés parallèlement entre eux, ainsi que disposés transversalement au sens de marche des objets (5), avec lesquelles des profils d'espacement des objets (5) peuvent être enregistrés,
- au moins une source de lumière (6) positionnée dans la zone des lignes de capteurs à semi-conducteurs (1, 2) pour l'éclairage de l'objet (5) avec des impulsions lumineuses.

2. Dispositif selon la revendication 1, des éléments capteurs (7) individuels des lignes de capteur à semi-conducteurs (1, 2) étant accessibles au choix.

3. Dispositif selon l'une quelconque des revendications précédentes, les lignes de capteurs à semi-conducteurs (1, 2) étant des composants CMOS.

4. Dispositif selon l'une quelconque des revendications précédentes, les sources de lumière (6) étant représentées par des diodes lasers modulables.

5. Dispositif selon l'une quelconque des revendications précédentes, plusieurs sources de lumière (6) étant utilisées pour l'éclairage à chaque fois partiel des objets (5).

6. Dispositif selon l'une quelconque des revendications précédentes, les lignes de capteur à semi-conducteurs (1, 2) étant disposées perpendiculairement au sens de marche des objets (5).

7. Dispositif selon l'une quelconque des revendications précédentes, les lignes de capteur à semi-conducteurs (1, 2) étant disposées au-dessus des objets (5) ou sur le côté de ces objets.

8. Dispositif selon l'une quelconque des revendications précédentes, les zones d'enregistrement des lignes de capteurs à semi-conducteurs (1, 2) respectives étant espacées d'environ 1 m à l'emplacement de l'objet.

9. Dispositif selon l'une quelconque des revendications précédentes, la ligne éclairée sur l'arrière-plan de l'objet présentant une largeur allant de 1 à 2 cm.

10. Dispositif selon l'une quelconque des revendications précédentes, les mesures de propagation de lumière dans les éléments de capteur (7) individuels des lignes de capteur (1, 2) étant des mesures de temps de propagation d'impulsion, des intégrations de courte durée ou des mesures de phases.

11. Dispositif selon la revendication 10, les éléments de capteur (7) des lignes de capteur à semi-conducteurs (1, 2) étant constitués chacun, pour une intégration de courte durée, de deux zones d'élément (3, 4) séparées électriquement, dont des surfaces sensibles à la lumière sont imbriquées les unes dans les autres.

12. Dispositif selon l'une quelconque des revendications précédentes pour la détermination de la vitesse (V) et de la forme de surface de véhicules respectivement de véhicules automobiles.

13. Dispositif selon l'une quelconque des revendications précédentes, la zone d'enregistrement d'une ligne de capteur à semi-conducteurs (1, 2) enregistrant l'ensemble de la largeur de la chaussée.

14. Procédé pour déterminer la vitesse ou la forme de surface d'objets (5) déplacés ou une combinaison d'objets sur la base de mesures de temps de propagation de lumière, des profils d'espacement d'objets (5) déplacés étant établis au moyen d'un dispositif selon l'une quelconque des revendications 1 à 13 et un profil d'espacement de l'arrière-plan sans objet et un profil d'espacement de l'arrière-plan avec objet étant enregistrés pour l'analyse et un profil de section de l'objet (5) étant déterminé à partir de leur différence.

15. Procédé selon la revendication 14, la surface de la section correspondante étant déterminée par intégration du profil de section.

16. Procédé selon la revendication 15, le profil longitudinal de l'objet (5) déplacé étant déterminé à partir de la séquence des surfaces de section.

17. Procédé selon l'une quelconque des revendications 14 à 16, un objet (5) déplacé étant classé à l'aide de profil de section et de profil longitudinal dans des catégories telles que personne, moto, voiture de tourisme ou camion.

18. Procédé selon l'une quelconque des revendications 14 à 17, deux intégrations de courte durée différentes avec deux temps d'intégration (T1, T2) différents étant effectuées pour le même emplacement d'objet lors de la mesure du temps de propagation de la lumière.

19. Procédé selon la revendication 18, les deux intégrations de courte durée étant effectuées pour la même zone de surface à chaque fois par l'une des deux zones d'éléments (3, 4) s'engageant les unes dans les autres des éléments de capteur (7).
